# EUROPEAN PATENT APPLICATION

(11) **EP 1 442 660 A1**
(43) Date of publication of application: **04.08.2004**
(21) Application number: 04000316.2
(22) Date of filing: 09.01.2004
(51) Int. Cl.: A21B 1/48, A21B 1/26

(54) **Oven for the continuous cooking of food products**

(30) Priority: 24.01.2003 IT mi20030110
(71) Applicant: Moretti Forni S.p.A., 61035 Marotta (PU) (IT)
(72) Inventor: Moretti, Marco, 61100 Pesaro (IT)
(74) Representative: Frignoli, Luigi

(57) **Abstract**

Electric oven for cooking food products (5) passing through the oven cooking chamber (2) on a conveyor belt (4), in which a fan (10) draws air from the central region of the cooking chamber (2) and compresses it, making it pass firstly over heating resistance elements (15,16), then into two air diffusers (19,20) having holes through which the air is blown onto the upper and lower surfaces of the products (5) being cooked which rest on the belt (4), elements (11,12) being provided to reduce air turbulence in the cooking chamber (2).

## Description

The present invention relates to an electric oven with conveyor belt for the continuous cooking of food products resting on the conveyor belt and passing through the oven cooking chamber.

Ovens of various types, both electric and gas, with or without forced air, have long been available commercially for cooking food products. The oven loading and unloading can be manual or automated, depending on circumstances, but in either case a good quality oven should rapidly and uniformly cook the food product, whereas the outer surface of the oven should remain fairly cool in order not to cause burns to persons who may touch the oven when in operation.

In static ovens, cooking uniformity is obtained manually by the operator, who by observing the degree of cooking moves the product within the interior of the cooking chamber until the desired result is obtained, and manually carries out the loading and unloading operations.

Those ovens without forced air but with a conveyor belt which conveys the product to be cooked suffer from the problem of a very long cooking time, as the product is neither exposed to forced air nor in direct contact with the oven hearth.

In forced-air belt ovens, cooking takes place automatically and rapidly on a moving conveyor belt, onto the upper and lower surface of which hot air is blown. Numerous oven constructions of this type are known, such as those described in US-A-4438572, US-A-4556043, US-A-4576090, US-A-4591333, US-A-4626661, and in addition US-A-3908533, US-A-4951648 and EP-A-0419213.

All these patents have the common characteristic of comprising a conveyor belt (on which the food products to be cooked are rested) and an electric motor carrying a fan which draws air from the central region of the oven (substantially at the same or slightly higher level than the upper surface of the conveyor belt) and blows it firstly onto electrical resistance heaters which heat the air, and then into diffusers positioned both above and below the conveyor belt and having a plurality of holes through which the hot air leaves to be hence blown onto both the upper surface and lower surface of the food products present in the cooking chamber. The ovens described in the aforesaid patents all have the drawback that the hot air flows originating from above and below within the cooking chambers are disturbed by the movement of the air drawn by the fan from the oven central region and which, by creating turbulence within the cooking chambers, compromise the blowing efficiency of the hot air leaving the diffusers, to create cooking non-uniformity, with the result that the food products obtained are not uniformly cooked and are therefore not considered to be of good quality.

Moreover, known ovens do not enable the temperature of the upper part and, independently thereof, of the lower part of the respective cooking chamber to be easily and quickly controlled to an optimum value

The main object of the present invention is therefore to provide an electric oven with conveyor belt of the aforesaid type, in which the turbulence generated by the hot air blown into the cooking chamber can be eliminated or at least reduced to an acceptable level, so that the food products cooked in the oven have optimum and uniform cooking characteristics.

Another object is to attain the aforesaid object by means of elements of simple and economical structure and operation.
A further object is to be able to quickly and easily vary the temperature in the upper part of the oven compared with its lower part, even though using the same blowing source.

These and other objects are attained by an electric oven for the continuous cooking of food products, comprising a thermally insulated casing (1, 3) defining a cooking chamber (2) in which a movable conveyor belt (4) is positioned with its two ends projecting from opposing apertures provided in said casing (1, 3), with the oven there being rigid an electric motor (9) the shaft of which carries at a first end a fan (27) which draws fresh air from the environment and forces it through an interspace (29) between the casing (1) and the layer of oven insulating material (3), and at its other end a second fan (10) which draws air from the central region of the cooking chamber (2) on one side of the conveyor belt (4) and forces this air to graze electrical resistance heating elements (15, 16) and to enter at least two separate air diffusers (19, 20) which extend substantially along the entire width of the conveyor belt of the cooking chamber and are positioned one (19) above and the other (20) below the conveyor belt (4), that surface of said diffusers (19, 20) facing the conveyor belt presenting a plurality of holes through which there emerge jets of hot air (23, 24) directed onto the adjacent upper and respectively lower surface of the conveyor belt (4), characterised in that in correspondence with that end of the belt close to said second fan there are provided two separate partitions (11, 12) for intercepting the flow of air drawn in by the second fan (10), a first partition (11) being positioned above the lateral edge and above the upper surface of the conveyor belt (4) to leave a passage (25) free for the air drawn in by the fan (10), above the upper surface of the conveyor belt in correspondence with that side thereof facing the second fan (10), the second partition (12) being positioned between the first partition (11) and the second fan (10) to intercept the hot air flow which passes beyond the first partition (11) and to deviate it radially outwards to cause it to pass through peripheral channels distributed along the length of the cooking chamber.

Preferably, said first partition (11) is movable between a raised position and a lowered position to vary the height of said passage (25) for the air drawn in by the fan (10).

Also preferably, at the entrance to each of said air diffusers (19, 20) there is provided a separate movable partition (21, 22) to regulate the hot air flow into each diffuser (19, 20).

Again preferably, sensors (17, 18) are provided connected to an electronic control unit (31) positioned outside the oven to enable the temperature of the air fed into the cooking chamber (2) above and respectively below the conveyor belt (4) to be controlled, measured and displayed.

The oven characteristics will be more apparent from the ensuing description of a preferred embodiment thereof, given by way of non-limiting example with reference to the accompanying drawings, in which:
Figure 1 is an external perspective view of the oven;
Figure 2 is a schematic enlarged-scale cross-section through the oven on the line 2-2 of Figure 1; and
Figure 3 is a longitudinal section through the oven on the line 3-3 of Figure 2.

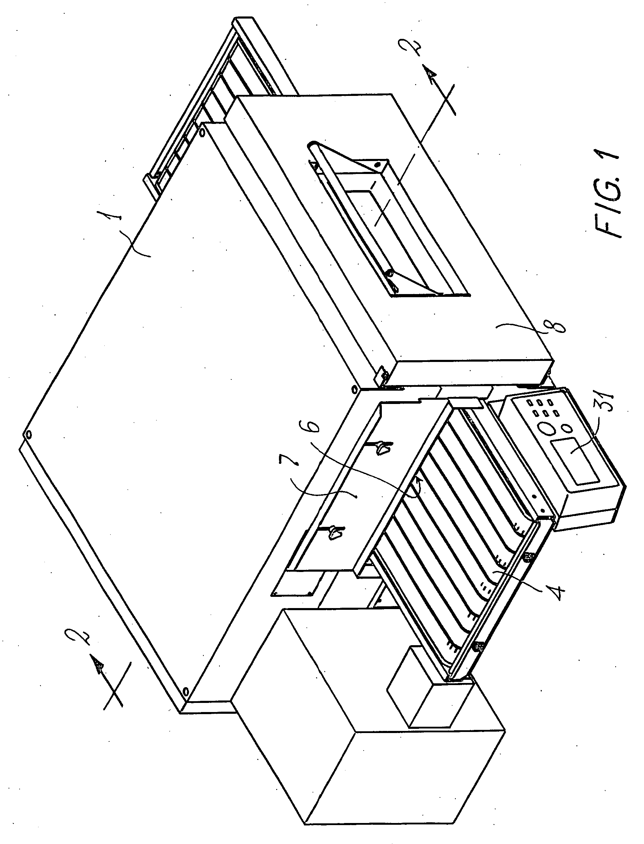

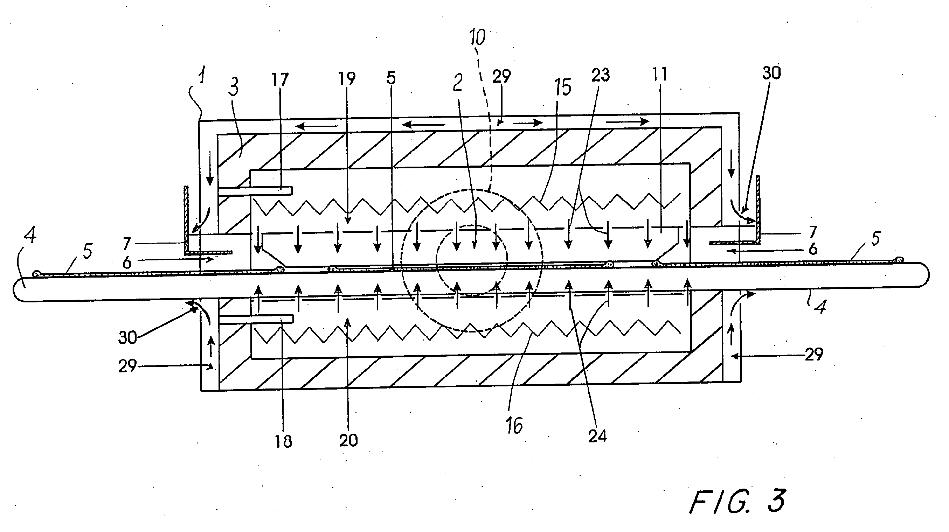

From the drawings it can be seen that an outer casing (1) contains a cooking chamber (2) enclosed within an insulating enclosure (3) and traversed by a mesh conveyor belt (4) on which the products (5) to be cooked are rested; the products enter and leave through apertures (6) positioned on both sides of the oven and provided (Figures 1 and 3) with adjustable gates (7) to reduce hot air dispersion at the product entry and exit to a minimum, the passage speed of the products (5) being adjusted by the operator.

A front door (8) provides access for the internal cleaning of the cooking chamber.

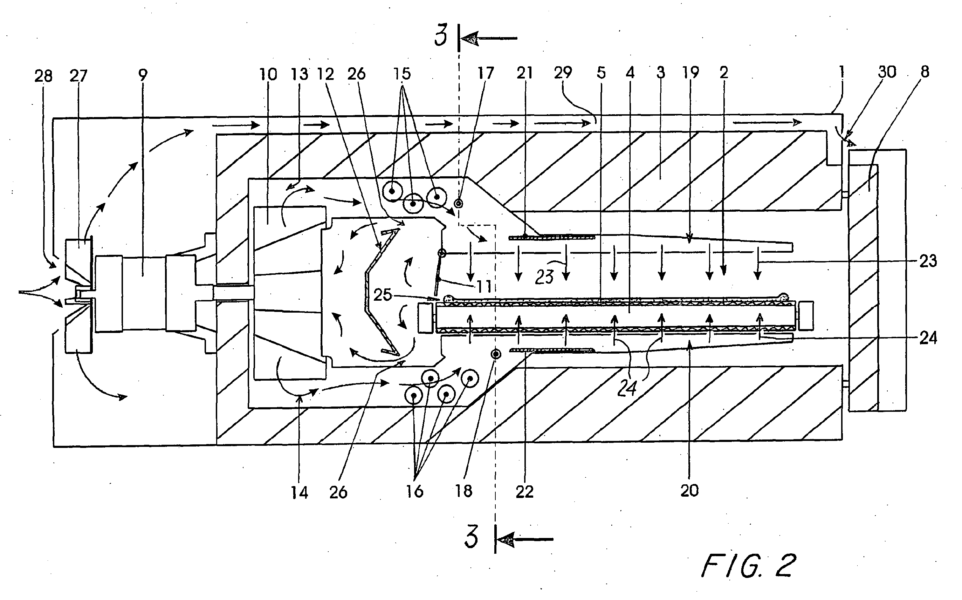

The oven comprises an electric motor (9), on one end of the shaft of which there is mounted a centrifugal fan (10) which draws air centrally from the cooking chamber (2) as can be seen from Figure 2; the air flow reaches the fan through a labyrinth defined by two walls (11, 12) of which at least the wall (11) is movable and rotatable about a horizontal axis, they traversing the entire inner length of the cooking chamber when viewed from the front. The velocity of the hot air stream passing through the cooking chamber can be increased or decreased by adjusting the position of the wall (11), so enabling cooking of the products present in the cooking chamber to be controlled.

The fan (10) expels the air tangentially through the conduits (13,14) forcing this air to graze upper and lower electrical resistances (15, 16) independently heating the air to the desired temperature along the entire width of the oven; the temperature of the air is sensed by an upper sensor (17) and by a lower sensor (18), such temperatures being displayed on an electronic control unit (31) by which the operator controls the two temperature either at his own discretion or in accordance with pre-established programs; the air blown by the fan (10) follows its path and enters a diffuser (19) positioned above the conveyor belt (4) and a diffuser (20) positioned below the same conveyor belt; the volume of the air flow can be independently controlled by means of movable partitions (21, 22) provided at the entrance to each of said air-diffusers (19, 20) - as it can be seen from Figure 2 - in order to regulate the hot air flow directed above and respectively below the products to be cooked.

The air is then expelled by the diffusers above and below the product (5) to be cooked via a plurality of sized holes provided in the diffusers (19, 20) in such a manner as to direct the hot air jets (indicated by short arrows carrying the numbers 23 and 24) above and respectively below the conveyor belt (4), to hence cook the product conveyed by said belt.

The hot air flow originating from the diffusers within the cooking chamber is not influenced by the suction of the fan (10) before having grazed with the required intensity and with the minimum possible turbulence the product (5) to be cooked, as the wall (11) creates with the frame of the conveyor belt (4) a slot (25) which extends along the entire length of the oven and forcibly draws in air at high velocity only after it has reached the end of its path, i.e. beyond the edge of the mesh (4). To prevent creation of an excess of suction in the central region in front of the fan (10) between the conveyor belt (4) and the fan, a second wall (12) is inserted which, by forming two peripheral channels (26), distributes the flow of indrawn air over the entire length of the oven.

On the other end of its shaft the motor (9) mounts a second centrifugal fan (27) which, by drawing air at ambient temperature from the outside of the casing through the aperture (28), forces it to pass through the interspaces (29) formed between the insulation layer (3)and the outer casing (1) of the oven to cool it, and then leave through suitable discharge slits (30).

## Claims

1. An electric oven for the continuous cooking of food products, comprising a thermally insulated casing (1, 3) defining a cooking chamber (2) in which a movable conveyor belt (4) is positioned with its two ends projecting from opposing apertures provided in said casing (1, 3), with the oven there being rigid an electric motor (9) the shaft of which carries at a first end a fan (27) which draws fresh air from the environment and forces it through an interspace (29) between the casing (1) and the layer of oven insulating material (3), and at its other end a second fan (10) which draws air from the central region of the cooking chamber (2) on one side of the conveyor belt (4) and forces this air to graze electrical resistance heating elements (15, 16) and to enter at least two separate air diffusers (19, 20) which extend substantially along the entire length of the conveyor belt of the cooking chamber and are positioned one (19) above and the other (20) below the conveyor belt (4), that surface of said diffusers (19, 20) facing the conveyor belt presenting a plurality of holes through which there emerge jets of hot air (23, 24) directed onto the adjacent upper and respectively lower surface of the conveyor belt (4), **characterised in that** in correspondence with that end of the belt close to said second fan there are provided two separate partitions (11, 12) for intercepting the flow of air drawn in by the second fan (10), a first partition (11) being positioned above the lateral edge and above the upper surface of the conveyor belt (4) to leave a passage (25) free for the air drawn in by the fan (10), above the upper surface of the conveyor belt in correspondence with that side thereof facing the second fan (10), the second partition (12) being positioned between the first partition (11) and the second fan (10) to intercept the hot air flow which passes beyond the first partition (11) and to deviate it radially outwards to cause it to pass through peripheral channels distributed along the length of the cooking chamber.

2. An electric oven as claimed in claim 1, **characterised in that** said first partition (11) is movable between a raised position and a lowered position to vary the height of said passage (25) for the air drawn in by the fan (10).

3. An electric oven as claimed in claims 1 and 2, **characterised in that** at the entrance to each of said air diffusers (19, 20) there is provided a separate movable partition (21, 22) to regulate the hot air flow into each diffuser (19, 20).

4. An electric oven as claimed in claims from 1 to 3, **characterised by** comprising sensors (17, 18) connected to an electronic control unit (31) positioned outside the oven to enable the temperature of the air fed into the cooking chamber (2) above and respectively below the conveyor belt (4) to be controlled, measured and displayed.
